(19) Europäisches Patentamt
European Patent Office
Office européen des brevets

(11) EP 0 890 616 A1

(12) **EUROPEAN PATENT APPLICATION**
published in accordance with Art. 158(3) EPC

(43) Date of publication:
**13.01.1999 Bulletin 1999/02**

(21) Application number: **97908505.7**

(22) Date of filing: **26.03.1997**

(51) Int. Cl.$^6$: **C08L 81/02**

(86) International application number:
**PCT/JP97/01005**

(87) International publication number:
**WO 97/35923 (02.10.1997 Gazette 1997/42)**

(84) Designated Contracting States:
**AT CH DE FR LI**

(30) Priority: **26.03.1996 JP 96238/96**

(71) Applicant:
**KUREHA KAGAKU KOGYO KABUSHIKI KAISHA**
**Chuo-ku Tokyo 103 (JP)**

(72) Inventors:
- **SUZUKI, Yasuhiro**
**Nishiki Research Laboratories**
**Nishiki-machi, Iwaki-shi Fukushima 974 (JP)**
- **KOIZUMI, Tomoyoshi**
**Nishiki Research Laboratories**
**Nishiki-machi, Iwaki-shi Fukushima 974 (JP)**
- **GOTO, Hitoshi**
**Nishiki Research Laboratories**
**Nishiki-machi, Iwaki-shi Fukushima 974 (JP)**
- **USUI, Satoshi**
**Nishiki Research Laboratories**
**Nishiki-machi, Iwaki-shi Fukushima 974 (JP)**

(74) Representative:
**Jones, Helen Marjorie Meredith et al**
**Gill Jennings & Every,**
**Broadgate House,**
**7 Eldon Street**
**London EC2M 7LH (GB)**

# (54) RESIN COMPOSITION

(57) A resin composition having excellent impact resistance and moldability, comprising a poly(arylene sulfide) (a), a polyolefin (b) and an epoxy group-containing $\alpha$-olefin copolymer (c). In the resin composition, (1) the poly(arylene sulfide) (a), the polyolefin (b) and the epoxy group-containing $\alpha$-olefin copolymer (c) are compounded in proportions of 98 to 50 mass%, 1 to 25 mass% and 1 to 25 mass%, respectively, (2) the polyolefin (b) is at least one polyethylene resin selected from the group consisting of linear low density polyethylene and very low density polyethylene, (3) a mass ratio (b:c) of the polyolefin (b) to the epoxy group-containing $\alpha$-olefin copolymer (c) is from 1:5 to 5:1, and (4) the polyolefin (b) and the epoxy group-containing $\alpha$-olefin copolymer (c) are respectively dispersed in the poly(arylene sulfide) (a) as fine particles having an average particle size of 0.10 to 3.00 $\mu$m.



Printed by Xerox (UK) Business Services
2.16.7/3.6

## Description

### TECHNICAL FIELD

The present invention relates to a poly(arylene sulfide) resin composition, and particularly to a poly(arylene sulfide) resin composition having excellent impact resistance and moldability. When the poly(arylene sulfide) resin composition according to the present invention is subjected to extrusion in particular, extruded products of various forms such as tubes or pipes, plates and rods, which are excellent in impact resistance and extremely low in residual stress, can be provided.

### BACKGROUND ART

Poly(arylene sulfides) (hereinafter abbreviated as "PAS") represented by poly(phenylene sulfide) (hereinafter abbreviated as "PPS") are used in wide fields such as electrical parts and automotive parts as engineering plastics excellent in heat resistance, chemical resistance, flame retardance, electrical properties, dimensional stability and the like. However, the PAS generally have involved drawbacks that they are poor in impact resistance, and their moldability is not always sufficient, so that their use may have been limited in some cases according to their applications.

In order to improve the impact resistance of PAS, various proposals have heretofore been made. For example, it has been known that when a fibrous filler such as glass fiber or carbon fiber is compounded into PAS, the impact resistance, rigidity, toughness, dimensional stability and the like of PAS are enhanced. However, PAS is still brittle even when the fibrous filler is compounded, so that the effect of improving physical properties cannot be sufficiently achieved. Besides, in resin compositions in which a large amount of a fibrous filler has been compounded, their applications and moldability come to be limited.

Therefore, there have been proposed resin compositions obtained by compounding an olefin copolymer composed of an α-olefin and a glycidyl ester of an α,β-unsaturated acid into PAS (Japanese Patent Application Laid-Open Nos. 152953/1984, 189166/1984 and 153345/1987). However, when the olefin copolymer is compounded into PAS, the melt viscosity of the resulting resin composition is increased, and so its moldability is lowered. In addition, it is difficult to achieve a sufficient effect to improve impact resistance.

A resin composition obtained by compounding an epoxy group-containing olefin polymer and an elastomer into PPS has been proposed (Japanese Patent Publication No. 24388/1992). This resin composition is improved in melt flowability. However, die swell upon compounding becomes great, since the elastomer is compounded, so that it is impossible to stably form a strand from the resin composition, and difficulty is hence encountered on pelletizing. In addition, it is difficult to obtain an extruded product such as a tubular formed product from this resin composition for the same reason as described above.

There has also been proposed a thermoplastic resin composition obtained by compounding 0.1 to 100 parts by weight of (III) a thermoplastic resin of a multi-phase structure, which is composed of 5 to 95 wt.% of an olefin (co)polymer and 95 to 5 wt.% of a vinyl (co)polymer obtained from at least one vinyl monomer, and in which one of the (co)polymers forms a disperse phase having a particle size of 0.001 to 10 μm, into 100 parts by weight of a mixture [(I) + (II)] of 99 to 1 wt.% of (I) a polyolefin and 1 to 99 wt.% of (II) PAS (Japanese Patent Application Laid-Open No. 129245/1990). This publication discloses, as the thermoplastic resin of the multi-phase structure (III), a mixture or grafted product composed of 1 to 100 wt.% of a graft copolymer precursor (A) obtained by copolymerizing at least one vinyl monomer and a radical-(co)polymerizable organic peroxide in particles of an olefin (co)polymer, 0 to 99 wt.% of an olefin (co)polymer (B), and 0 to 99 wt.% of a vinyl (co)polymer (C), and also describes the use of an epoxy group-containing ethylene copolymer as the olefin (co)polymer. The resin composition described in this publication uses low density polyethylene, polypropylene or the like as the polyolefin (I). However, the resin composition in which such a polyolefin has been compounded is insufficient in the effect to improve impact resistance and involves a problem that when an extruded product such as a tubular formed product is formed from the resin composition, it has a high residual stress and tends to deform or stress-crack.

### DISCLOSURE OF THE INVENTION

It is an object of the present invention to provide a PAS resin composition having excellent impact resistance and moldability.

Another object of the present invention is to provide a PAS resin composition from which extruded products of various forms such as tubes or pipes, plates and rods, which are excellent in impact resistance and extremely low in residual stress, can be obtained by extrusion.

The present inventors have carried out an extensive investigation with a view toward overcoming the above-described problems involved in the prior art. As a result, it has been found that a resin composition having excellent

impact resistance and moldability can be obtained by (i) compounding a polyolefin and an epoxy group-containing α-olefin copolymer in specific proportions into PAS, (ii) selecting and using at least one polyethylene resin selected from the group consisting of linear low density polyethylene and very low density polyethylene as the polyolefin, (iii) controlling a compounding ratio of the polyolefin to the epoxy group- containing α-olefin copolymer within a range selected, and (iv) dispersing the polyolefin and the epoxy group- containing α-olefin copolymer in a PAS matrix in such a manner that average particle sizes thereof fall within specific ranges respectively selected. Extruded products such as tubular formed products obtained by using this resin composition feature that their residual stresses are extremely low. The present invention has been led to completion on the basis of these findings.

According to the present invention, there is thus provided a resin composition comprising a poly(arylene sulfide) (a), a polyolefin (b) and an epoxy group-containing α-olefin copolymer (c), wherein

(1) the poly(arylene sulfide) (a), the polyolefin (b) and the epoxy group-containing α-olefin copolymer (c) are compounded in proportions of 98 to 50 mass%, 1 to 25 mass% and 1 to 25 mass%, respectively,
(2) the polyolefin (b) is at least one polyethylene resin selected from the group consisting of linear low density polyethylene and very low density polyethylene,
(3) a mass ratio (b:c) of the polyolefin (b) to the epoxy group-containing α-olefin copolymer (c) is from 1:5 to 5:1, and
(4) the polyolefin (b) and the epoxy group-containing α-olefin copolymer (c) are respectively dispersed in the poly(arylene sulfide) (a) as fine particles having an average particle size of 0.10 to 3.00 μm.

BEST MODE FOR CARRYING OUT THE INVENTION

Poly(arylene sulfide) (PAS):

PAS useful in the practice of the present invention is an aromatic polymer having predominant recurring units of arylene sulfide represented by the formula [-Ar-S-] in which Ar means an arylene group. When a recurring unit [-Ar-S-] is defined as 1 mole (basal mole), the PAS used in the present invention is a polymer containing this recurring unit in a proportion of generally at least 50 mol%, preferably at least 70 mol%, more preferably at least 90 mol%.

Examples of arylene groups usable include a p-phenylene group, a m-phenylene group, substituted phenylene groups (the substituent being preferably an alkyl group having 1 to 6 carbon atoms or a phenyl group), a p,p'-diphenylene sulfone group, a p,p'-biphenylene group, a p,p'-diphenylenecarbonyl group, a p,p'-diphenyleneether group and a naphthylene group. As the PAS, a polymer predominantly having only the same arylene groups may preferably be used. However, a copolymer having two or more different arylene groups may be used from the viewpoint of processability and heat resistance.

Among these PAS, PPS having predominant recurring units of p-phenylene sulfide is particularly preferred because it is excellent in processability and industrially available with ease. Specific preferable examples of copolymers include random or block copolymers having recurring units of p-phenylene sulfide and recurring units of m-phenylene sulfide, random or block copolymers having recurring units of phenylene sulfide and recurring units of arylene ketone sulfide, and random or block copolymers having recurring units of phenylene sulfide and recurring units of arylene sulfone sulfide. These PAS are preferably crystalline polymers. Besides, the PAS are preferably linear polymers from the viewpoints of melt properties, toughness and strength.

The PAS used in the present invention can be obtained in accordance with any known process in which an alkali metal sulfide and a dihalo-aromatic compound are subjected to a polymerization reaction in a polar organic solvent (for example, Japanese Patent Publication Nos. 3368/1970, 12240/1977 and 33775/1988). As examples of the alkali metal sulfide, may be mentioned sodium sulfide, potassium sulfide, lithium sulfide, rubidium sulfide, cesium sulfide and mixtures thereof. The alkali metal sulfide may be prepared *in situ* in a reactor in accordance with a method known *per se* in the art. The alkali metal sulfide may be used as a hydrate or aqueous mixture, or in an anhydrous form. A small amount of an alkali metal hydroxide may be added to react alkali metal hydrosulfides and/or alkali metal thiosulfates, which are present in a trace amount in alkali metal sulfides, to react therewith, thereby remove these impurities or convert them into their corresponding sulfides. Among these alkali metal sulfides, sodium sulfide is industrially preferred because it is most cheap.

As examples of the dihalo-aromatic compound, may be mentioned dihalobenzenes such as p-dichlorobenzene, m-dichlorobenzene, o-dichlorobenzene and p-dibromobenzene; substituted dihalobenzenes such as 2,5-dihalotoluene and 1-methoxy-2,5-dichlorobenzene; dihalonaphthalenes such as 1,4-dichloronaphthalene; dihalobiphenyls such as 4,4'-dichlorobiphenyl and 3,3'-dichlorobiphenyl; dihalobenzoic acids such as 3,5-dichlorobenzoic acid; dihalobenzophenones such as 4,4'-dichlorobenzophenone; and dihalophenyl ethers such as 4,4'-dichlorodiphenyl sulfone and 3,3'-dichlorodiphenyl ether. These compounds may be used either singly or in any combination thereof. Among these, dihalobenzenes are preferred from the viewpoints of economy and physical properties, with p-dihalobenzenes such as

p-dichlorobenzene being more preferred. As the dihalo-aromatic compounds, those containing a p-dihalobenzene in a proportion of preferably at least 70 wt.%, more preferably at least 80 wt.%, most preferably at least 90 wt.% are particularly preferred.

In order to introduce some branched or crosslinked structure into the PAS, a small amount of a polyhaloaromatic compound having at least 3 halogen substituents per molecule may be used in combination. Examples of such polyhalo-aromatic compounds include trihalobenzenes such as 1,2,3-trichlorobenzene, 1,2,3-tribromobenzene, 1,2,4-trichlorobenzene, 1,2,4-tribromobenzene, 1,3,5-trichlorobenzene, 1,3,5-tribromobenzene and 1,3-dichloro-5-bromobenzene, alkyl-substituted trihalobenzenes, and mixtures thereof. Among these, 1,2,4-trichlorobenzene, 1,3,5-trichlorobenzene and 1,2,3-trichlorobenzene are preferred from the viewpoints of economy, reactivity, physical properties and the like.

As a preparation process of the PAS, a process, in which the alkali metal sulfide and the dihalo-aromatic compound are subjected to a polycondensation reaction in a polar organic solvent containing water in the presence of the polyhalo-aromatic compound if desired, is preferred. The water includes, for example, water from a hydrated alkali metal sulfide, water added, water formed by reaction and water from an aqueous solution of an alkali metal sulfide. Examples of organic amide solvents include amide compounds such as N,N-dimethylformamide and N,N-dimethylacetamide; N-alkyl- or N-cycloalkyl pyrrolidone compounds such as N-methyl-ε-caprolactam, N-methyl-2-pyrrolidone and N-cyclohexyl-2-pyrrolidone; N,N-dialkylimidazolidinone compounds such as 1,3-dialkyl-2-imidazolidinones; tetraalkylurea compounds such as tetramethylurea; and hexaalkylphosphoric triamides such as hexamethylphosphoric triamide. These organic amide solvents may be used either singly or in any combination thereof. Among these organic amide solvents, NMP is particularly preferred from the viewpoints of economy and stability.

A ratio a/b of the number of moles, a of the dihaloaromatic compound charged to the number of moles, b of the alkali metal sulfide charged is controlled so as to fall within a range of generally from 0.95 to 1.10, preferably from 0.98 to 1.08, more preferably from 1.00 to 1.06. When a polyhalo-aromatic compound having at least 3 halogen substituents per molecule is used, it is added to the polymerization reaction system by adjusting its amount so as to fall within a range of generally from 0.0002 to 0.01 mole, preferably from 0.0004 to 0.009 mole, more preferably from 0.0005 to 0.007 mole, per mole of the alkali metal sulfide charged. The addition of the polyhalo-aromatic compound to the polymerization reaction system may be conducted either at the initial stage of the polymerization or at the final stage of the polymerization. However, the addition at the initial stage is more effective even when it is added in a smaller amount.

No particular limitation is imposed on the polymerization process, and any conventionally-known process may be adopted. A specific example thereof includes a process in which a reaction is conducted at a temperature of 150 to 235°C in a state that water exists in a proportion of 0.5 to 2.4 moles per mole of the alkali metal sulfide charged, and water is then caused to exist in the reaction system in a proportion of 2.5 to 7.0 moles per mole of the alkali metal sulfide charged to continue the reaction with the temperature raised to 245-280°C. The amount of the polar solvent used is generally 0.2 to 2.0 kg, preferably 0.3 to 1.0 kg, per mole of the alkali metal sulfide.

The PAS used in the present invention is preferably a linear polymer. However, a PAS, in which some branched or crosslinked structure has been introduced by using a small amount of a polyhalo-aromatic compound having at least 3 halogen substituents per molecule in combination, may be used. However, a crosslinked polymer obtained by subjecting a low-molecular weight PAS to oxidative crosslinking (curing) in the presence of air is not preferred because it is poor in processability and low in strength and toughness.

The PAS used in the present invention is a polymer having a melt viscosity within a range of generally from 1 to 2,000 Pa•s, preferably from 10 to 500 Pa•s as measured at 310°C and a shear rate of 1200/sec. If the melt viscosity of the PAS is too low, the resulting resin composition becomes low in strength such as impact resistance. If the melt viscosity is too high on the other hand, the resulting resin composition becomes poor in, for example, extrudability. It is hence not preferable to use a PAS having such a low or high melt viscosity.

<u>Polyolefin</u>:

In the present invention, at least one polyethylene resin selected from the group consisting of linear low density polyethylene (hereinafter abbreviated as "LLDPE") and very low density polyethylene (hereinafter abbreviated as "VLDPE") is used as the polyolefin.

LLDPE used in the present invention is a substantially linear copolymer containing ethylene units and α-olefin units the number of carbon atoms of which is 3 to 18, preferably 4 to 12, more preferably 6 to 10. The content of the α-olefin units in LLDPE is generally 1 to 20 mass%, preferably 2 to 17 mass%, more preferably 3 to 15 mass%. The density of LLDPE is higher than 0.880 g/cm$^3$, and preferably within a range of from 0.885 to 0.950 g/cm$^3$, more preferably from 0.890 to 0.930 g/cm$^3$. LLDPE and VLDPE overlap each other in density, and so the boundary between them is not always clear. In the present invention, however, a linear low density ethylene-α-olefin copolymer is defined as LLDPE.

Specific examples of LLDPE include ethylene/propylene copolymers, ethylene/1-butene copolymers, ethylene/1-hexene copolymers, ethylene/4-methyl-1-pentene copolymers and ethylene/1-octene copolymers. As LLDPE, not only

those produced using a multi site catalyst such as a Ziegler type catalyst or a Phillips type catalyst, but also those made using a single site catalyst such as a metallocene catalyst may be preferably used. Specific examples of trade names of LLDPE made using a multi site catalyst include Unipol (UC Corp.), Dowlex (Dow Chemical Co.), Sclair (DuPont Canada Co.), Mitsubishi Poly-Eth-LL (Mitsubishi Kagaku), Marlex (Phillips Co.) and Ultzex (Mitsui Petrochemical). Specific examples of trade names of LLDPE made using a single site catalyst include AFFINITY (Dow Chemical Co.) and EXACT (Exxon Co.).

The structure of LLDPE is such that it is more linear compared with the conventional low density polyethylene, but it is more branched compared with high-density polyethylene. It often has short chain branches composed of alkyl side chains based on the α-olefin at portions of the polymer back bone. LLDPE also includes those modified without substantially changing the above structure, for example, graft copolymers thereof.

VLDPE used in the present invention is a copolymer of ethylene and an α-olefin having 3 to 12 carbon atoms, which has a density higher than 0.880 $g/cm^3$, but not higher than 0.915 $g/cm^3$, and preferably of 0.885 to 0.915 $g/cm^3$. As described above, LLDPE and VLDPE overlap each other in density, and so they are not always clearly distinguished from each other. In the present invention, however, a polymer clearly having a straight-chain tendency (linearity) is defined as LLDPE. The lower limit of density of LLDPE and VLDPE is higher than 0.880 $g/cm^3$, preferably at least 0.885 $g/m^3$. The density is a value measured in accordance with ASTM D-1238.

An ethylene-α-olefin copolymer having a density not higher than 0.880 $g/m^3$ is generally an elastomer. When such an elastomer is used in place of LLDPE or VLDPE in the resin composition according to the present invention, swell upon compounding becomes great, so that it is impossible to stably form a strand from the resulting resin composition, and difficulty is hence encountered on pelletizing. In addition, it is difficult to obtain an extruded product such as a tubular formed product from the resin composition containing such an elastomer.

LLDPE and VLDPE may be used either singly or in combination. Of these, LLDPE is particularly preferred from the viewpoints of impact resistance, moldability and residual stress.

<u>Epoxy group-containing α-olefin copolymer</u>:

The epoxy group-containing α-olefin copolymer useful in the practice of the present invention is a copolymer having at least recurring units derived from an α-olefin (i.e., α-olefin units) and recurring units derived from a glycidyl group-containing unsaturated monomer (i.e., glycidyl group-containing unsaturated monomer units). Typical examples of the epoxy group-containing α-olefin copolymer include (1) copolymers of an α-olefin and a glycidyl group-containing unsaturated monomer and (2) graft copolymer precursors obtained by copolymerizing at least one ethylenically unsaturated monomer and a radical-(co)polymerizable organic peroxide in the presence of a copolymer of an α-olefin and a glycidyl group-containing unsaturated monomer. The graft copolymer precursor may be grafted upon its melt kneading with other components, or may be melt-kneaded in advance to graft it before its blending with other components.

The copolymers of an α-olefin and a glycidyl group-containing unsaturated monomer include poly-component copolymers containing at least three monomer units of an α-olefin, a glycidyl group-containing unsaturated monomer and a further unsaturated monomer in addition to the binary copolymers of both monomers. The content of the α-olefin units in the copolymer is generally 50 to 99.5 mass%, preferably 60 to 99 mass%, more preferably 70 to 98 mass%. The content of the glycidyl group-containing unsaturated monomer units is generally 0.5 to 50 mass%, preferably 1 to 40 mass%, more preferably 2 to 30 mass%. The content of the further unsaturated monomer units is generally 0 to 40 mass%, preferably 0 to 30 mass%, more preferably 0 to 20 mass%. The polymeric form of the epoxy group-containing α-olefin copolymer may be any of random, block and graft copolymers.

Examples of the α-olefin monomer include ethylene, propylene 1-butene, 1-hexene, 1-octene and 4-methyl-1-pentene. Among these, ethylene is particularly preferably used.

Examples of the glycidyl group-containing unsaturated monomer include glycidyl esters such as glycidyl acrylate, glycidyl methacrylate, monoglycidyl itaconate, monoglycidyl butenetricarboxylate, diglycidyl butenetricarboxylate, triglycidyl butenetricarboxylate, monoglycidyl maleate, monoglycidyl crotonate and monoglycidyl fumarate; glycidyl ethers such as vinyl glycidyl ether, allyl glycidyl ether, glycidyloxyethyl vinyl ether and styrene-p-glycidyl ether; and p-glycidylstyrene. Among these, the glycidyl esters of α,β-unsaturated acids are preferred.

Examples of the further unsaturated monomer include vinyl ester monomers such as vinyl acetate and vinyl propionate, vinyl ether monomers, vinyl aromatic monomers such as (meth)acrylonitrile, styrene and α-methylstyrene, and carbon monoxide.

Specific examples of the copolymers of the α-olefin and the glycidyl group-containing unsaturated monomer include ethylene/glycidyl methacrylate copolymers, ethylene/vinyl acetate/glycidyl methacrylate copolymers, ethylene/ethyl acrylate/glycidyl methacrylate copolymers, ethylene/glycidyl acrylate copolymers and ethylene/vinyl acetate/glycidyl acrylate copolymers. Among these, ethylene/glycidyl methacrylate copolymers, ethylene/ethyl acrylate/glycidyl methacrylate copolymers and ethylene/vinyl acetate/glycidyl methacrylate copolymers are preferred. These copolymers may be used either singly or in any combination thereof.

The copolymer of the α-olefin and the glycidyl group-containing unsaturated monomer can be obtained by subjecting a monomer mixture containing 50 to 99.5 mass% of the α-olefin, 0.5 to 50 mass% of the glycidyl group-containing unsaturated monomer and 0 to 40 mass% of the further unsaturated monomer to high-pressure polymerization in the presence of a radical polymerization initiator in an amount of 0.0001 to 1 mass% based on the total mass of the monomers. The pressure upon the polymerization is generally 5 to 40 kPa, preferably 10 to 35 kPa. The reaction temperature is generally 50 to 400°C, preferably 100 to 350°C. The polymerization reaction is conducted by a method of catalytically polymerizing the monomer mixture at once or by stages in the presence of a chain transfer agent and an optional auxiliary under conditions of these reaction pressure and reaction temperature.

Examples of the radical polymerization initiator include general-purpose initiators such as peroxides, hydroperoxides, azo compounds, amine oxide compounds and oxygen. Examples of the chain transfer agent include saturated aliphatic hydrocarbons and halogen-substituted products thereof, such as methane, ethane, butane, isobutane, n-hexane, n-heptane and chloroform; saturated aliphatic alcohols such as methanol, ethanol, propanol and isopropanol; saturated aliphatic carbonyl compounds such as acetone and methyl ethyl ketone; aromatic compounds such as toluene, diethylbenzene and xylene; and hydrogen. When the α-olefin is neither propylene nor 1-butene, these compounds may also be used as the chain transfer agent.

The graft copolymer precursor obtained by polymerizing at least one ethylenically unsaturated monomer and a radical-(co)polymerizable organic peroxide in the presence of a copolymer of an α-olefin and a glycidyl group-containing unsaturated monomer is disclosed in, for example, Japanese Patent Application Laid-Open No. 131220/1989, 138214/1989 or 129245/1990. This graft copolymer precursor is easily grafted by heating it at 100 to 300°C. The term "grafting" means that the polymer of the ethylenically unsaturated monomer is chemically bonded to the copolymer of the α-olefin and the glycidyl group-containing unsaturated monomer by graft reaction, crosslinking reaction or mixed reaction thereof. To have been chemically bonded can be clarified by the fact that two (co)polymers cannot be separated from each other by a solvent which dissolves one (co)polymer therein. As described above, the copolymer of the α-olefin and the glycidyl group-containing unsaturated monomer includes poly-component copolymers containing at least three monomer units, to which a further unsaturated monomer has been copolymerized.

A proportion of the copolymer of the α-olefin and the glycidyl group-containing unsaturated monomer in the graft copolymer precursor is generally 5 to 95 mass%, preferably 20 to 90 mass%. If the proportion of the copolymer is too low, the compatibility of the resulting graft copolymer precursor with PAS becomes insufficient. If the proportion is too high on the other hand, there is a possibility that the heat resistance and dimensional stability of the resulting resin composition may be lowered. A proportion of the glycidyl group-containing unsaturated monomer units in the copolymer is generally 0.5 to 50 mass%, preferably 1 to 40 mass%, more preferably 2 to 30 mass%. When glycidyl group-containing unsaturated monomer units are contained in the polymer of the vinyl monomer, the proportion of the glycidyl group-containing unsaturated monomer units in the copolymer can be reduced according to the proportion of the glycidyl group-containing unsaturated monomer units contained in the polymer of the vinyl monomer.

Examples of the unsaturated ethylene monomer used in the preparation of the graft copolymer precursor include vinyl aromatic monomers such as styrene, α-methyl- styrene and chlorostyrene; (meth)acrylic ester monomers such as the $C_{1-7}$-alkyl esters of (meth)acrylic acid; glycidyl ester monomers of α,β-unsaturated acids; unsaturated nitrile monomers such as (meth)acrylonitrile; and vinyl ester monomers such as vinyl acetate. Among these, any of the glycidyl ester monomers of α,β-unsaturated acids, vinyl aromatic monomers and unsaturated nitrile monomers may be preferably used as a main component. Incidentally, the (meth)acrylic acid means acrylic acid or methacrylic acid.

The epoxy group-containing α-olefin copolymer with the polymer of the ethylenically unsaturated monomer chemically bonded to the copolymer of the α-olefin and the glycidyl group-containing unsaturated monomer by graft reaction, crosslinking reaction or mixed reaction thereof can be obtained by copolymerizing such polymers by a chain transfer process, ionizing radiation process or the like. However, most preferably, the graft copolymer precursor can be obtained by (co)polymerizing at least one ethylenically unsaturated monomer using a radical- (co)polymerizable organic peroxide such as t-butyl peroxymethacryloyloxyethyl carbonate in the presence of a copolymer of an α-olefin and a glycidyl group-containing unsaturated monomer.

More specifically, in order to produce the graft copolymer precursor, an aqueous suspension is prepared by suspending 100 parts by mass of the copolymer of the α-olefin and the glycidyl group-containing unsaturated monomer in water. On the other hand, a solution is prepared by dissolving, in 5 to 400 parts by mass of at least one ethylenically unsaturated monomer, at least one radical-(co)polymerizable organic peroxide in a proportion of 0.1 to 10 parts by mass per 100 parts by mass of the ethylenically unsaturated monomer, and a radical polymerization initiator, the decomposition temperature for obtaining a half-life of 10 hours of which is 40 to 90°C, in a proportion of 0.01 to 5 parts by mass per 100 parts by mass in total of the ethylenically unsaturated monomer and the radical-(co)polymerizable organic peroxide. The solution was added to the aqueous suspension, and the mixture was heated under conditions that the decomposition of the radical polymerization initiator does substantially not occur, thereby impregnating the copolymer of the α-olefin and the glycidyl group-containing unsaturated monomer with the ethylenically unsaturated monomer, radical-(co)polymerizable organic peroxide and radical polymerization initiator. Thereafter, the temperature

of the aqueous suspension is raised to copolymerize the ethylenically unsaturated monomer and the radical-(co)polymerizable organic peroxide in the copolymer, thereby producing the graft copolymer precursor.

This graft copolymer precursor is melted and kneaded at 100 to 300°C, whereby an epoxy group-containing α-olefin copolymer of the structure that the polymer of the ethylenically unsaturated monomer is chemically bonded to the copolymer of the α-olefin and the glycidyl group-containing unsaturated monomer can be obtained. The graft copolymer precursor may be grafted at the time it is melted and kneaded with PAS and other components. Preferably, the epoxy group-containing α-olefin copolymer of the structure that the polymer of the ethylenically unsaturated monomer is chemically bonded to the copolymer of the α-olefin and the glycidyl group-containing unsaturated monomer is prepared in advance, and this copolymer is melted and kneaded with PAS and other components.

Examples of the radical-(co)polymerizable organic peroxide used in the preparation of the graft copolymer precursor include compounds represented by the following formula (1):

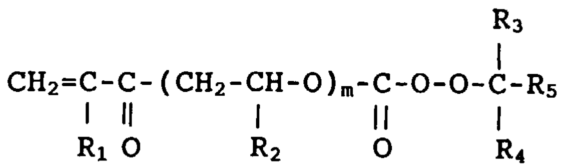
(1)

wherein $R_1$ is a hydrogen atom or an alkyl group having 1 or 2 carbon atoms, $R_2$ is a hydrogen atom or a methyl group, $R_3$ and $R_4$ are individually an alkyl group having 1 to 4 carbon atoms, $R_5$ is an alkyl group having 1 to 12 carbon atoms, a phenyl group, an alkyl-substituted phenyl group, or a cycloalkyl group having 3 to 12 carbon atoms, and m is 1 or 2.

Other examples of the radical-(co)polymerizable organic peroxide include compounds represented by the following formula (2):

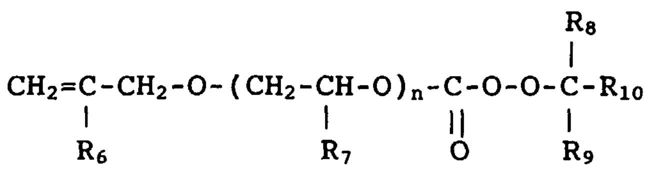
(2)

wherein $R_6$ is a hydrogen atom or an alkyl group having 1 to 4 carbon atoms, $R_7$ is a hydrogen atom or a methyl group, $R_8$ and $R_9$ are individually an alkyl group having 1 to 4 carbon atoms, $R_{10}$ is an alkyl group having 1 to 12 carbon atoms, a phenyl group, an alkyl-substituted phenyl group, or a cycloalkyl group having 3 to 12 carbon atoms, and n is 0, 1 or 2.

Examples of the radical-(co)polymerizable organic peroxides represented by the formula (1) include t-butyl-peroxy(meth)acryloyloxy(ethoxy)ethyl carbonate, t-amyl-peroxy(meth)acryloyloxy(ethoxy)ethyl carbonate, t-hexyl-peroxy(meth)acryloyloxy(ethoxy)ethyl carbonate, cumylperoxy(meth)acryloyloxy(ethoxy)ethyl carbonate and p-isopropylperoxy(meth)acryloyloxy(ethoxy)ethyl carbonate. Examples of the radical-(co)polymerizable organic peroxides represented by the formula (2) include t-butylperoxy-(meth)allyl carbonate, cumylperoxy(meth)allyl carbonate and t-butylperoxy(meth)allyloxyethyl carbonate.

Among these, t-butylperoxyacryloyloxyethyl carbonate, t-butylperoxymethacryloyloxyethyl carbonate, t-butylperoxy-allyl carbonate and t-butylperoxymethacryl carbonate are preferred.

Resin composition:

The resin compositions according to the present invention are resin compositions comprising a PAS (a), a polyolefin (b) and an epoxy group-containing α-olefin copolymer (c).

Compounding proportions of the individual components are as follows. The PAS (a) is 98 to 50 mass%, the polyolefin (b) is 1 to 25 mass%, and the epoxy group-containing α-olefin copolymer (c) is 1 to 25 mass%. As the polyolefin, at least one polyethylene resin selected from the group consisting of LLDPE and VLDPE is used.

If the compounding proportion of the PAS is too low, the excellent properties inherent in the PAS, such as heat resistance, chemical resistance, flame retardance, electrical properties and dimensional stability, are impaired. If the compounding proportion of the PAS is too high, the effect of improving physical properties such as impact resistance becomes insufficient. The compounding proportion of the PAS is preferably 95 to 60 mass%, more preferably 90 to 70 mass%.

The polyethylene resin and epoxy group-containing α-olefin copolymer are compounded into the PAS with both

components combined in specific compounding proportions, whereby a resin composition having excellent impact resistance and moldability can be obtained. In addition, extruded products such as tubular formed products, which are extremely low in residual stress, can be obtained from this resin composition. When only one of the polyethylene resin and epoxy group-containing α-olefin copolymer is compounded into the PAS, any resin composition having excellent impact resistance and moldability cannot be obtained. When polypropylene or low density polyethylene is used as the polyolefin (b), the effect of improving impact resistance becomes insufficient. In addition, when the resulting resin composition is formed into a tubular formed product or the like, its residual stress becomes high. When an elastomer is used as the polyolefin (b), any resin composition having good extrudability cannot be obtained.

Since the effects of the combined use of the polyethylene resin and the epoxy group-containing α-olefin copolymer are marked as described above, a resin composition having good properties can be obtained even when the compounding proportions of these components are lowered, whereby extruded products highly retaining the various properties inherent in the PAS can be provided. The compounding proportion of the polyethylene resin of the component (b) is preferably 2 to 20 mass%, more preferably 3 to 15 mass%. The compounding proportion of the epoxy group-containing α-olefin copolymer of the component (c) is preferably 2 to 20 mass%, more preferably 3 to 15 mass%.

In the present invention, it is necessary to control a mass ratio (b:c) of the polyolefin (b) (i.e., the polyethylene resin) to the epoxy group-containing α-olefin copolymer (c) within a range of from 1:5 to 5:1. Both components are used in combination within the range of this mass ratio, whereby a resin composition far excellent in various properties such as impact resistance can be obtained. A mass ratio outside the above range results in a resin composition deteriorated in impact resistance in particular. The mass ratio (b:c) is preferably from 1:3 to 4:1, more preferably from 1:2 to 3:1.

In the resin compositions according to the present invention, it is necessary to respectively disperse the polyolefin (b) (i.e., the polyethylene resin) and the epoxy group-containing α-olefin copolymer (c) in the PAS matrix as fine particles having an average particle size of 0.10 to 3.00 μm. The average particle size is determined through a transmission electron microscope. These two components are dispersed in the PAS as such fine particles, whereby a resin composition excellent in various properties such as impact resistance and moldability can be obtained. In addition, tubular formed products and the like, which are extremely low in residual stress, can be obtained from this resin composition. The average particle size of the polyethylene resin is preferably 0.10 to 3.00 μm, more preferably 0.13 to 2.00 μm, most preferably 0.16 to 1.00 μm. The average particle size of the epoxy group-containing α-olefin copolymer is preferably 0.10 to 3.00 μm, more preferably 0.13 to 2.00 μm, most preferably 0.16 to 1.00 μm.

By the way, it has been found that when a polyethylene resin having a bond strength of at least 30 N/20 mm to an epoxy group-containing α-olefin copolymer, particularly, a graft copolymer obtained by melting and kneading the above-described graft copolymer precursor to graft it (i.e., the epoxy group-containing α-olefin copolymer of the structure that the polymer of the ethylenically unsaturated monomer is chemically bonded to the copolymer of the α-olefin and the glycidyl group-containing unsaturated monomer) is selected as said at least one polyethylene resin selected from the group consisting of LLDPE and VLDPE, a formed product, for example, a tubular formed product or solid-phase extruded product, obtained from the resulting resin composition becomes extremely low in residual stress and excellent in impact resistance. When a pipe having an outer diameter of 115 mm and a wall thickness of 6.2 mm is extruded from such a resin composition, the residual stress of the pipe can be reduced to 4 MPa or lower, preferably 3 MPa or lower, more preferably 1 MPa or lower. In many cases, it is also possible to reduce the residual stress to 0.5 MPa or lower. The detail of the measuring method of the bond strength is described in EXAMPLES.

To the resin compositions according to the present invention, other resins and various additives may be suitably added, as needed, within limits not impeding the objects of the present invention. Preferable examples of the other resins include aromatic polyester resins, polyamide resins and polysulfone resins. Examples of the additives include ultraviolet absorbents, pigments, antioxidants and fillers.

As the filler, may be compounded an inorganic filler in the form of powder, plates or fiber. The inorganic filler is compounded within a range of generally from 0 to 150 parts by mass, preferably from 0 to 100 parts by mass, per 100 parts by mass of the resin composition according to the present invention. Examples of the inorganic filler include powdery fillers such as calcium sulfate, calcium silicate, clay, diatomaceous earth, talc, alumina, quartz sand, glass powder, iron oxide, metal powders, graphite, silicon carbide, silicon nitride, silica, boron nitride, aluminum nitride and carbon black; platy or flaky fillers such as mica, sericite, pyrophyllite, metal flakes such as aluminum flake, and graphite; hollow fillers glass balloons, metal balloons, shirasu balloons and pumice stone; and mineral fibers such as glass fiber, carbon fiber, graphite fiber, whiskers, metal fibers, silicon carbide fiber, asbestos and wollastonite. The inorganic fillers may be preferably surface-treated with stearic acid, oleic acid, palmitic acid, or a metal salt thereof, paraffin wax, organic silane, organic titanate, or the like.

The resin compositions according to the present invention can be obtained by melting and kneading the individual components in a temperature range of from the crystalline melting point of the PAS to 350°C, preferably from the crystalline melting point of the PAS to 320°C. With respect to the order of the melting and kneading, all the components may be melted and kneaded at the same time, or the components (b) and (c) are melted and kneaded in advance, and the mixture thus obtained may be then kneaded with the PAS. In particular, it is preferred that the components be mechanically mixed in advance in a tumbler, Henschel mixer or the like, and then melted and kneaded in an extruder.

The resin compositions according to the present invention can be formed or molded into various formed or molded products such as sheets, films, tubes, pipes, plates and rods by conventional melt processing techniques such as injection molding and extrusion. When the resin compositions according to the present invention are formed into extruded products such as pipes (tubular formed products), plates and rods, the residual stresses of the resulting formed products can be made extremely low.

EXAMPLES

The preferred embodiments of the present invention will hereinafter be described more specifically by the following Preparation Examples, Examples and Comparative Examples.

Physical properties in the examples were measured in accordance with the following respective methods.

(1) Average particle size:

Transmission electron microscope were taken using samples cut out of a specimen obtained by injection molding, and particle sizes of respective disperse particles were measured (n = 30) from these photographs to determine average values thereof.

(2) Izod impact strength:

A specimen obtained by injection molding was used to measure its Izod impact strength (notched) in accordance with ASTM D-256.

(3) Adhesive bond strength:

Adhesive bond strength between the polyolefin (b) and the epoxy group-containing $\alpha$-olefin copolymer (c) was measured in the following manner.

A sheet of each polymer was produced by holding 6 to 7 g of the polymer between ferroplates coated with a polytetrafluoroethylene sheet to press the polymer. The press temperature was 150°C. After the pressing was conducted for 1 minute under no load and then for 5 seconds under a load of 2 MPa, the sheet thus formed was taken out of the press machine and allowed to cool in the air.

The sheets of the polyolefin (b) and the epoxy group-containing $\alpha$-olefin copolymer (c) thus obtained were put together with an aluminum foil coated with a release agent (Daifree, trade name, product of Daikin Industries, Ltd.) interposed therebetween in such a manner that its area amounted to one third of the area of each sheet. The sheets put together were then set in a frame 0.5 mm thick and held between ferroplates coated with a polytetrafluoroethylene sheet (thickness: 300 µm) to press the sheets. The press temperature was 200°C. After the pressing was conducted for 2 minutes under no load and then for 10 seconds under a load of 0.98 MPa, the resultant laminate sheet was taken out of the press machine and allowed to cool in the air.

The thus-obtained laminate sheet was subjected to a peeling test using a Tensilon. The peeling test was conducted by means of the Tensilon under the following conditions:

Sample size: 20 mm wide;
Length of a portion to be peeled: 40 mm.

The measuring conditions of the Tensilon were as follows:

Load cell: 5 kg;
Peel rate: 50 mm/min;
Distance between chucks: 10 mm.

Incidentally, the peeling was started from a position where the sheets were separated with hands by about 2 to 3 mm in width. The thus-obtained peel strength was defined as the bond strength (N/20 mm) between both polymer components.

(4) Modulus in flexure:

Measured in accordance with ASTM D-790.

(5) Residual stress:

A pipe (tubular formed product) obtained by extrusion was cut into lengths of 50 mm in a direction of extrusion to measure an outer diameter ($D_0$; cm) and a wall thickness (t; cm) of the cut pipe. Cuts were then made in peripheral portions of the cut pipe at intervals of 40 mm in parallel in the extrusion direction to make vertical splits in the cut pipe, thereby measuring an outer diameter ($D_1$; cm) of the cut pipe at this time.

The residual stress of the pipe was determined in accordance with the following equation:

$$S = E \times t \times [(1/D_1) - (1/D_0)]$$

wherein

S: residual stress [MPa],
E: modulus in flexure [MPa],
t: wall thickness of the pipe [cm],
$D_0$: outer diameter of the pipe before the cutting [cm],
$D_1$: outer diameter of the pipe after the cutting [cm].

[Preparation Example 1]

Epoxy group-containing α-olefin copolymer (c-1):

A 5-liter autoclave made of stainless steel was charged with 2500 g of purified water, and 2.5 g of polyvinyl alcohol as a suspending agent were dissolved in the water. In the solution, were placed 700 g of an ethylene/glycidyl methacrylate copolymer (content of glycidyl methacrylate: 15 mass%; Nisseki Lexpal J3700, product of Nippon Petrochemicals Co., Ltd.) as an epoxy group-containing α-olefin copolymer. The resultant mixture was stirred in a nitrogen atmosphere to form a dispersion. On the other hand, 1.5 g of benzoyl peroxide as a radical polymerization initiator and 6 g of t-butylperoxymethacryloyloxyethyl carbonate as a radical-polymerizable organic peroxide were dissolved in 300 g of styrene. This styrene solution was poured into the autoclave and stirred.

The autoclave was heated to 60-65°C, and the mixture was stirred for 2 hours to impregnate the ethylene/glycidyl methacrylate copolymer with the styrene solution containing the radical polymerization initiator and the radical-polymerizable organic peroxide. The temperature was then raised to 80-85°C, and the reaction mixture was held for 7 hours in this state to complete polymerization. The thus-obtained product was then washed with water and dried to obtain a graft copolymer precursor.

The graft copolymer precursor was then extruded from an extruder at 200°C to allow the precursor to chemically react, thereby obtaining an epoxy group-containing α-olefin copolymer (c-1).

[Preparation Example 2]

Epoxy group-containing α-olefin copolymer (c-2):

An epoxy group-containing α-olefin copolymer (c-2) was obtained in the same manner as in Preparation Example 1 except that the amounts of the ethylene/glycidyl methacrylate copolymer (content of glycidyl methacrylate: 15 mass%) and styrene in Preparation Example 1 were changed from 700 g to 600 g, and from 300 g to 400 g, respectively.

[Example 1]

Respective components of their corresponding compounding proportions shown in Table 1 were mixed in advance in a tumbler and then melted and kneaded at a barrel temperature of 280 to 320°C in a twin-screw extruder to extrude the melt into a strand. The strand was cooled and then chopped into pellets. The thus-obtained pellets were injection-molded at a cylinder temperature of 280 to 320°C by an injection molding machine to form a specimen which was to be used for measuring the properties of the resultant resin composition. The results are shown in Table 1.

[Examples 2 to 19 and Comparative Examples 1 to 7]

Specimens and pipes were produced in the same manner as in Example 1 except that the respective components and compounding proportions thereof were changed as shown in Table 1. The results are shown in Table 1.

⟨Respective polymer components⟩

The respective polymer components used in these Examples and Comparative Examples were as follows:

(1) PPS:
"FORTRON KPS", trade name; product of Kureha Chemical Industry Co., Ltd. [poly(phenylene sulfide); melt viscosity measured at 310°C and a shear rate of 1200/sec: 380 Pa • s].
(2) LL1:
"Mitsubishi Poly-Eth-LL UF240", trade name; product of Mitsubishi Kagaku Co., Ltd. (linear low density polyethylene; density: 0.920 g/cm$^3$).
(3) LL2:
"Ultzex 1520L", trade name; product of Mitsui Petrochemical Industries, Ltd. (linear low density polyethylene; density: 0.915 g/cm$^3$).
(4) LL3:
"Affinity PF1140", trade name; product of Dow Chemical Co. (linear low density polyethylene; density: 0.895 g/cm$^3$).
(5) LL4:
"Exact 3027", trade name; product of Exxon Co.)
(linear low density polyethylene; density: 0.900 g/cm$^3$).
(6) VL:
"Nisseki Softlex D9010", trade name; product of Nippon Petrochemicals Co., Ltd. (very low density polyethylene; density: 0.900 g/cm$^3$).
(7) L:
"Nisseki Lexlon J40", trade name; product of Nippon Petrochemicals Co., Ltd. (low density polyethylene; density: 0.920 g/cm$^3$).
(8) c-1:
The epoxy group-containing $\alpha$-olefin copolymer prepared in Preparation Example 1.
(8) c-2:
The epoxy group-containing $\alpha$-olefin copolymer prepared in Preparation Example 2.

Table 1

| | Resin composition | | | | | | | | | | Phys.[*3] prop. |
|---|---|---|---|---|---|---|---|---|---|---|---|
| | Component (a) | | Component (b) | | | Component (c) | | | Mass ratio (b): (c) | Adhesive bond strength (N/20 mm) | Izod-impact strength (J/m) |
| | Kind | Prop. (%) | Kind | Prop. (%) | APS[*1] (μm) | Kind | Prop. (%) | APS[*1] (μm) | | | |
| Ex. 1 | PPS | 90 | LL1 | 2 | 0.29 | c-1 | 8 | 0.33 | 1:4 | 43 | 175 |
| Comp. EX. 1 | PPS | 90 | L | 2 | 0.35 | c-1 | 8 | 0.39 | 1:4 | 0.25 | 120 |
| Ex. 2 | PPS | 90 | LL1 | 5 | 0.25 | c-1 | 5 | 0.19 | 1:1 | 43 | 180 |
| Ex. 3 | PPS | 75 | LL1 | 5 | 0.41 | c-1 | 20 | 0.80 | 1:4 | 43 | 600 |
| Comp. Ex. 2 | PPS | 75 | L | 5 | 0.68 | c-1 | 20 | 0.98 | 1:4 | 0.25 | 410 |
| Ex. 4 | PPS | 85 | LL1 | 10 | 0.62 | c-1 | 5 | 0.28 | 2:1 | 43 | 250 |
| Ex. 5 | PPS | 85 | LL2 | 10 | 0.61 | c-1 | 5 | 0.29 | 2:1 | 44 | 260 |
| Ex. 6 | PPS | 85 | LL3 | 10 | 0.58 | c-1 | 5 | 0.26 | 2:1 | 46 | 270 |
| Ex. 7 | PPS | 85 | LL4 | 10 | 0.57 | c-1 | 5 | 0.28 | 2:1 | 45 | 270 |
| Ex. 8 | PPS | 85 | VL | 10 | 0.73 | c-1 | 5 | 0.29 | 2:1 | 31 | 200 |
| Comp. Ex. 3 | PPS | 85 | L | 10 | 0.88 | c-1 | 5 | 0.28 | 2:1 | 0.25 | 115 |
| Ex. 9 | PPS | 85 | LL1 | 10 | 0.58 | c-2 | 5 | 0.23 | 2:1 | 44 | 245 |
| Ex. 10 | PPS | 85 | LL3 | 10 | 0.55 | c-2 | 5 | 0.29 | 2:1 | 45 | 280 |
| Ex. 11 | PPS | 85 | VL | 10 | 0.76 | c-2 | 5 | 0.32 | 2:1 | 32 | 195 |
| Comp. Ex. 4 | PPS | 85 | L | 10 | 0.92 | c-2 | 5 | 0.31 | 2:1 | 0.20 | 110 |
| Ex. 12 | PPS | 75 | LL1 | 10 | 0.69 | c-1 | 15 | 0.56 | 2:3 | 43 | 455 |
| Ex. 13 | PPS | 75 | LL2 | 10 | 0.65 | c-1 | 15 | 0.58 | 2:3 | 44 | 435 |
| Ex. 14 | PPS | 75 | LL3 | 10 | 0.60 | c-1 | 15 | 0.52 | 2:3 | 46 | 455 |
| Ex. 15 | PPS | 75 | LL4 | 10 | 0.61 | c-1 | 15 | 0.79 | 2:3 | 45 | 460 |
| Ex. 16 | PPS | 75 | VL | 10 | 0.89 | c-1 | 15 | 0.63 | 2:3 | 31 | 390 |
| Comp. Ex. 5 | PPS | 75 | L | 10 | 0.98 | c-1 | 15 | 0.70 | 2:3 | 0.25 | 250 |
| Ex. 17 | PPS | 75 | LL2 | 10 | 0.61 | c-2 | 15 | 0.56 | 2:3 | 43 | 445 |
| Ex. 18 | PPS | 75 | LL4 | 10 | 0.60 | c-2 | 15 | 0.60 | 2:3 | 46 | 450 |
| Comp. Ex. 6 | PPS | 75 | L | 10 | 1.10 | c-2 | 15 | 0.73 | 2:3 | 0.20 | 290 |
| Ex. 19 | PPS | 75 | LL1 | 20 | 1.20 | c-1 | 5 | 0.32 | 4:1 | 43 | 300 |
| Comp. Ex. 7 | PPS | 75 | L | 20 | 1.40 | c-1 | 5 | 0.37 | 4:1 | 0.25 | 90 |

*1: Average particle size (μm).
*2: Adhesive bond strength between (b) and (c).
*3: Physical properties.

⟨Physical properties⟩

Representative resin compositions were selected from among those prepared in the above Examples and Comparative Examples, and the pellets obtained above were used to form pipes (tubular formed products) of their corresponding outer diameters ($D_0$) and wall thicknesses shown in Table 2 in accordance with an outside diameter sizing process

by a single-screw extruder the cylinder and die temperatures of which were each preset to 280-320°C, thereby measuring their flexural modulus, outer diameters ($D_1$) after cutting the pipes and residual stresses. The results are shown in Table 2.

Table 2

| | Physical properties of tubular formed product | | | | |
|---|---|---|---|---|---|
| | Wall thickness of tubular formed product (mm) | flexural modulus (MPa) | $D_0$ (mm) | $D_1$ (mm) | Residual stress (MPa) |
| Ex. 4 | 6.15 | 3000 | 115.02 | 114.94 | 0.11 |
| Ex. 12 | 6.17 | 2800 | 115.00 | 114.96 | 0.05 |
| Ex. 5 | 6.23 | 3050 | 114.96 | 114.88 | 0.12 |
| Ex. 6 | 6.24 | 2950 | 115.02 | 114.84 | 0.25 |
| Comp. Ex. 3 | 6.20 | 3100 | 115.04 | 107.34 | 11.98 |
| Comp. Ex. 5 | 6.21 | 2800 | 114.95 | 108.49 | 9.01 |

[Comparative Examples 8 to 10]

Specimens and pipes were produced in the same manner as in Example 1 except that an elastomer was used in place of the polyolefin (b), and respective components of their corresponding compounding proportions shown in Table 3 were used. "Toughmer A-4085" (trade name; ethylene/butene copolymer; product of Mitsui Petrochemical Industries, Ltd.; density: 0.880 g/cm$^3$) was used as the elastomer (E). The results are shown in Table 3. The results of Examples 12, 17 and 19 corresponding to these Comparative Examples 8 to 10 are also shown collectively in Table 3.

〈Moldability〉

The Moldability of the resin compositions was judged in accordance with the following standard:

A: Pelletizing and extrusion of pipe were stably feasible;
B: Pelletizing and extrusion of pipe were somewhat unstable;
C: Die swell upon compounding was too great to stably melt-extrude the resin composition into a strand, so that it was difficult to pelletize, and extrusion of pipe was infeasible.

Table 3

| | Resin composition | | | | | | | | Moldability |
|---|---|---|---|---|---|---|---|---|---|
| | Component (a) | | Component (b) | | Component (c) | | Mass ratio (b): (c) | Bond*1 strength (N/20 mm) | |
| | Kind | Prop. (%) | Kind | Prop. (%) | Kind | Prop. (%) | | | |
| Ex. 12 | PPS | 75 | LL1 | 10 | c-1 | 15 | 2:3 | 43 | A |
| Ex. 17 | PPS | 75 | LL2 | 10 | c-2 | 15 | 2:3 | 43 | A |
| Ex. 19 | PPS | 75 | LL1 | 20 | c-1 | 5 | 4:1 | 43 | A |
| Comp. Ex. 8 | PPS | 75 | E | 20 | c-1 | 5 | 4:1 | 30 | C |
| Comp. Ex. 9 | PPS | 75 | E | 10 | c-1 | 15 | 2:3 | 30 | C |
| Comp. Ex. 10 | PPS | 75 | E | 10 | c-2 | 15 | 2:3 | 32 | C |

*1: Bond strength between (b) and (c).

INDUSTRIAL APPLICABILITY

According to the present invention, there are provided resin compositions which highly retain various excellent properties inherent in PAS, such as heat resistance, chemical resistance, flame retardance, electrical properties and dimensional stability, and are markedly improved in impact resistance and moldability. When the resin compositions according to the present invention are formed into tubular formed products such as pipes or other extruded articles, the residual stresses thereof can be made extremely low. The resin compositions according to the present invention can be suitably used in wide fields such as electrical parts and automotive parts making good use of their excellent properties.

## Claims

1. A resin composition comprising a poly(arylene sulfide) (a), a polyolefin (b) and an epoxy group-containing α-olefin copolymer (c), wherein

   (1) the poly(arylene sulfide) (a), the polyolefin (b) and the epoxy group-containing α-olefin copolymer (c) are compounded in proportions of 98 to 50 mass%, 1 to 25 mass% and 1 to 25 mass%, respectively,
   (2) the polyolefin (b) is at least one polyethylene resin selected from the group consisting of linear low density polyethylene and very low density polyethylene,
   (3) a mass ratio (b:c) of the polyolefin (b) to the epoxy group-containing α-olefin copolymer (c) is from 1:5 to 5:1, and
   (4) the polyolefin (b) and the epoxy group-containing α-olefin copolymer (c) are respectively dispersed in the poly(arylene sulfide) (a) as fine particles having an average particle size of 0.10 to 3.00 µm.

2. The resin composition according to Claim 1, wherein the poly(arylene sulfide) (a) is poly(phenylene sulfide).

3. The resin composition according to Claim 1, wherein the linear low density polyethylene and the very low density polyethylene each have a density higher than 0.880 $g/cm^3$.

4. The resin composition according to Claim 1, wherein the polyolefin (b) is linear low density polyethylene having a density of 0.885 to 0.950 $g/cm^3$.

5. The resin composition according to Claim 1, wherein the polyolefin (b) is linear low density polyethylene obtained by polymerization using a single site catalyst.

6. The resin composition according to Claim 1, wherein the linear low density polyethylene is a copolymer of ethylene and an α-olefin having 6 to 10 carbon atoms.

7. The resin composition according to Claim 1, wherein the epoxy group-containing α-olefin copolymer (c) is an α-olefin/α,β-unsaturated acid glycidyl ester copolymer containing 50.0 to 99.5 mass% of α-olefin units and 0.5 to 50.0 mass% of α,β-unsaturated acid glycidyl ester units.

8. The resin composition according to Claim 1, wherein the bond strength between the polyolefin (b) and the epoxy group-containing α-olefin copolymer (c) is at least 30 N/20 mm.

9. The resin composition according to Claim 1, wherein the epoxy group-containing α-olefin copolymer (c) is a graft copolymer precursor obtained by polymerizing at least one ethylenically unsaturated monomer and at least one radical-(co)polymerizable organic peroxide in the presence of an α-olefin/α,β-unsaturated acid glycidyl ester copolymer.

10. The resin composition according to Claim 1, wherein the epoxy group-containing α-olefin copolymer (c) is a copolymer obtained by grafting a graft copolymer precursor obtained by polymerizing at least one ethylenically unsaturated monomer and at least one radical-(co)polymerizable organic peroxide in the presence of an α-olefin/α,β-unsaturated acid glycidyl ester copolymer under melting conditions.

11. The resin composition according to Claim 1, wherein a compounding proportion of the epoxy group-containing α-olefin copolymer (c) is 2 to 20 mass%.

12. The resin composition according to Claim 1, wherein a compounding proportion of the epoxy group-containing α-olefin copolymer (c) is 3 to 15 mass%.

13. The resin composition according to Claim 1, wherein a mass ratio (b:c) of the polyolefin (b) to the epoxy group-containing α-olefin copolymer (c) is from 1:2 to 3:1.

14. The resin composition according to Claim 1, wherein the polyolefin (b) is dispersed in the poly(arylene sulfide) (a) as fine particles having an average particle size of 0.13 to 2.00 μm.

15. The resin composition according to Claim 1, wherein the polyolefin (b) is dispersed in the poly(arylene sulfide) (a) as fine particles having an average particle size of 0.16 to 1.00 μm.

16. The resin composition according to Claim 1, wherein the epoxy group-containing α-olefin copolymer (c) is dispersed in the poly(arylene sulfide) (a) as fine particles having an average particle size of 0.13 to 2.00 μm.

17. The resin composition according to Claim 1, wherein the epoxy group-containing α-olefin copolymer (c) is dispersed in the poly(arylene sulfide) (a) as fine particles having an average particle size of 0.16 to 1.00 μm.

18. An extruded product obtained by extruding the resin composition according to any one of Claims 1 to 17.

19. The extruded product according to Claim 18, which is a tubular formed product.

## INTERNATIONAL SEARCH REPORT

International application No.
PCT/JP97/01005

**A. CLASSIFICATION OF SUBJECT MATTER**

Int. $Cl^6$ C08L81/02

According to International Patent Classification (IPC) or to both national classification and IPC

**B. FIELDS SEARCHED**

Minimum documentation searched (classification system followed by classification symbols)

Int. $Cl^6$ C08L81/02, C08L23/00, C08L33/00

Documentation searched other than minimum documentation to the extent that such documents are included in the fields searched

| | | | |
|---|---|---|---|
| Jitsuyo Shinan Koho | 1926 - 1996 | Jitsuyo Shinan Toroku Koho | 1996 - 1997 |
| Kokai Jitsuyo Shinan Koho | 1971 - 1997 | | |
| Toroku Jitsuyo Shinan Koho | 1994 - 1997 | | |

Electronic data base consulted during the international search (name of data base and, where practicable, search terms used)

WPI/L

**C. DOCUMENTS CONSIDERED TO BE RELEVANT**

| Category* | Citation of document, with indication, where appropriate, of the relevant passages | Relevant to claim No. |
|---|---|---|
| A | JP, 02-129245, A (Nippon Petrochemicals Co., Ltd.), May 17, 1990 (17. 05. 90), Claim; page 4, lower left column, lines 3 to 11 & US, 5204405, A & EP, 368295, A | 1 - 19 |
| A | JP, 01-178553, A (Tonen Chemical Corp.), July 14, 1989 (14. 07. 89), Claim (Family: none) | 1 - 19 |
| A | JP, 04-092112, A (Nippon Cable System Inc., Toray Industries, Inc.), March 25, 1992 (25. 03. 92), Claim; page 3, upper right column, line 3 to lower left column, last line; page 4, upper right column, lines 9 to 16 (Family: none) | 1 - 19 |
| A | JP, 02-178339, A (Mitsui Petrochemical Industries, Ltd.), July 11, 1990 (11. 07. 90), Claim; page 2, upper right column, line 19 to | 1 - 19 |

[X] Further documents are listed in the continuation of Box C. [ ] See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| June 23, 1997(23. 06. 97) | July 1, 1997 (01. 07. 97) |
| Name and mailing address of the ISA/<br>Japanese Patent Office<br>Facsimile No. | Authorized officer<br><br>Telephone No. |

Form PCT/ISA/210 (second sheet) (July 1992)

**INTERNATIONAL SEARCH REPORT**

International application No.
PCT/JP97/01005

C (Continuation). **DOCUMENTS CONSIDERED TO BE RELEVANT**

| Category* | Citation of document, with indication, where appropriate, of the relevant passages | Relevant to claim No. |
|---|---|---|
| | lower left column, line 9 (Family: none) | |
| A | JP, 58-154757, A (Toray Industries, Inc.), September 14, 1983 (14. 09. 83), Claim (Family: none) | 1 - 19 |

Form PCT/ISA/210 (continuation of second sheet) (July 1992)